# EUROPEAN PATENT APPLICATION

(11) **EP 4 611 013 A1**
(43) Date of publication of application: **03.09.2025**
(21) Application number: 23885738.7
(22) Date of filing: 30.10.2023
(51) Int. Cl.: H01G 9/028, H01G 9/00, H01G 9/025, H01G 9/15

(54) **SOLID ELECTROLYTIC CAPACITOR AND MANUFACTURING METHOD**

(30) Priority: 01.11.2022 JP 2022175755
(71) Applicant: Nippon Chemi-Con Corporation, Tokyo 141-8605 (JP); Daihachi Chemical Industry Co., Ltd., Osaka-shi, Osaka 541-0053 (JP); The University of Osaka, Suita-shi, Osaka 565-0871 (JP); PUBLIC UNIVERSITY CORPORATION NAGOYA CITY UNIVERSITY, Nagoya-shi, Aichi 467-8601 (JP)
(72) Inventor: KOSEKI, Kazuya, Tokyo 141-8605 (JP); MIYAMOTO, Momoyo, Tokyo 141-8605 (JP); KOIKE, Masaki, Tokyo 141-8605 (JP); KIRIYAMA, Kahori, Higashiosaka-shi, Osaka 577-0056 (JP); HATAI, Tomohiro, Higashiosaka-shi, Osaka 577-0056 (JP); HIRAO, Toshikazu, Suita-shi, Osaka 565-0871 (JP); AMAYA, Toru, Nagoya-shi, Aichi 467-8501 (JP)
(74) Representative: AWA Sweden AB
(86) International application number: PCT/JP2023/039150
(87) International publication number: WO 2024/095984

(57) **Abstract**

A solid electrolytic capacitor with improved capacity appearance rate, and a manufacturing method thereof are provided. A solid electrolyte layer of the solid electrolytic capacitor includes a first conductive polymer and a second conductive polymer. The first conductive polymer is a polymer of 3,4-ethylenedioxythiophene in which a methylene phosphonic acid group is introduced into an ethylenedioxy skeleton. The second conductive polymer is a polymer including 3,4-ethylenedioxythiophene or derivatives thereof. The first polymer of 3,4-ethylenedioxythiophene in which the methylene phosphonic acid group is introduced into the ethylenedioxy skeleton is attached to an anode body by a primary solid electrolyte layer formation process. The second polymer of 3,4-ethylenedioxythiophene or derivatives thereof is attached to a layer of the first polymer or the anode body by a secondary solid electrolyte layer formation process, that is different from and is after the first solid electrolyte layer formation process.

## Description

### FIELD OF INVENTION

The present disclosure relates to a solid electrolytic capacitor and a manufacturing method.

### BACKGROUND

A solid electrolytic capacitor includes valve action metal, such as tantalum or aluminum, as an anode body and a cathode body. The anode body is a sintered body obtained by sintering powder of the valve action metal or a foil body formed of elongated valve action metal, and a surface thereof is enlarged such as by etching. The enlarged surface of the anode body has dielectric oxide film thereon by processes such as anode oxidation. An solid electrolyte layer, which adheres to the anode body and acts as a true electrode, intervenes between the anode body and the cathode body.

Manganese dioxide and 7,7,8,8-tetracyanoquinodimethane (TCNQ) complex are known as the solid electrolytes. In recent years, poly(3,4-ethylenedioxythiophene) (PEDOT) with high conductivity is rapidly becoming popular as the solid electrolyte. Typically, poly(3,4-ethylenedioxythiophene) exhibits high conductivity when doped with polystyrene sulfonic acid (PSS).

Also, a solid electrolyte layer in which conductive polymers and polyvinyl acetal are mixed is suggested. In this solid electrolyte layer, the anode body is sequentially immersed in solution containing mixture solution of polyvinyl acetal and an oxidant and in solution of monomers to cause chemical polymerization reaction (For example, refer Patent Document 1).

### PRIOR ART DOCUMENT

### PATENT DOCUMENT

Patent Document 1: JP2021-64737A

### SUMMARY OF INVENTION

### PROBLEMS TO BE SOLVED BY INVENTION

In recent years, electronic devices and electric devices are becoming smaller and more powerful. Accordingly, it is required to improve the capacitance of the solid electrolytic capacitor per volume. Thus, an etching layer formed on the anode body is becoming denser to aim for larger surface area of the foil.

When the etching layer is dense, the capacity appearance rate of the solid electrolytic capacitor tends to decrease. The capacity appearance rate is a ratio of the capacitance of the solid electrolytic capacitor relative to the synthesized capacity of the anode body and the cathode body and is a percentage of a result obtained by dividing the capacitance of the solid electrolytic capacitor by the synthesized capacity of the anode body and the cathode body. That is, the efficiency of increasing the capacitance with respect to the denseness of the etching layer is poor.

Various assumptions can be made for the cause of the decrease in the capacity appearance rate. One reason may be that, for example, as the etching layer becomes more denser, voids forming the etching layer become finer, and it becomes more difficult to form the solid electrolyte layer inside the voids. The solid electrolyte layer adheres to the dielectric oxide film formed on the surface of the anode body. The adhesion forms a conductive path linked between the dielectric oxide film and the cathode body, so that the solid electrolyte layer acts as a true cathode. If the solid electrolyte is not filled in the voids of the etching layer or if the density of the conductive polymer filled in the voids is low, the area of the anode and the cathode facing each other is small. By this, the capacity appearance rate of the solid electrolytic capacitor may become smaller.

The present disclosure has been proposed to address the above problems, and an objective is to provide an electrolytic capacitor with improved capacity appearance rate, and the manufacturing method thereof.

### MEANS TO SOLVE THE PROBLEM

To address the above problem, a solid electrolytic capacitor of the present embodiment includes the following characteristics. A solid electrolyte layer contains a first conductive polymer and a second conductive polymer, and the first conductive polymer is a polymer of 3,4-ethylenedioxythiophene in which a methylene phosphonic acid group is introduced into an ethylenedioxy skeleton, and the second conductive polymer is a polymer of 3,4-ethylenedioxythiophene or derivatives thereof.

The solid electrolyte layer may have one or more regions of the first conductive polymer and one or more regions of the second conductive polymer.

The solid electrolyte layer includes an anode body formed on dielectric oxide film, and the first conductive polymer may adhere more to the anode body than the second conductive polymer.

The anode body may have an enlarged surface layer, and the region of the first conductive polymer is more densely distributed in the enlarged surface layer than the region of the second conductive polymer.

The anode body may have spongy etching pits.

The region of the first conductive polymer may contain none or a small amount of the second conductive polymer compared to the first conductive polymer, and the region of the second conductive polymer may contain none or a small amount of the first conductive polymer compared to the second conductive polymer.

Furthermore, to address the above problem, a manufacturing method of a solid electrolytic capacitor of the present embodiment includes the following characteristics. A manufacturing method of a solid electrolytic capacitor including an anode body, a cathode body, and a solid electrolyte layer, includes a primary solid electrolyte layer formation process of attaching a first polymer of 3,4-ethylenedioxythiophene in which a methylene phosphonic acid group is introduced into a ethylenedioxy skeleton to the anode body, and a secondary solid electrolyte layer formation process, that is different from and is after the first solid electrolyte layer formation process, of attaching a second polymer of 3,4-ethylenedioxythiophene or derivatives thereof to a region of the first polymer, or the anode foil.

A drying process may be performed between the primary solid electrolyte layer formation process and the secondary solid electrolyte layer formation process.

The secondary solid electrolyte layer formation process may include a chemical polymerization or an electrolytic polymerization to polymerize monomers of 3,4-ethylenedioxythiophene or derivatives thereof, or a process to impregnate at least the anode body with dispersion in which a polymer of 3,4-ethylenedioxythiophene or derivatives thereof is dispersed.

### EFFECT OF INVENTION

The solid electrolytic capacitor has high capacity appearance rate.

### BRIEF DESCRIPTION OF DRAWINGS

Hereinafter, a solid electrolytic capacitor and a manufacturing method thereof according to the embodiment of the present disclosure will be described. Note that the present disclosure is not limited to the following examples.

### (Overall Configuration)

A solid electrolytic capacitor is a passive element that gains the capacitance by dielectric polarization of dielectric oxide film and stores and discharges electric charge. This solid electrolytic capacitor includes an anode body in which dielectric oxide film is formed on a surface thereof, a cathode body, and a solid electrolyte layer. The anode body and the cathode body are arranged to face each other, and the solid electrolyte layer and a separator are intervened between the anode body and the cathode body. The anode body and the cathode body are arranged in a laminated-type in which they are laminated alternately via the separator, or arranged in a wound-type in which they are laminated and wound alternately via the separator.

The solid electrolyte layer includes a conductive polymer. The conductive polymer adheres to the dielectric oxide film formed on the surface of the anode body. The solid electrolyte layer forms a conductive path linked between the dielectric oxide film and the cathode body, so that the solid electrolyte layer acts as a true cathode. The solid electrolyte layer and electrolytic solution can be used together for the electrolytic capacitor, and the electrolytic solution is filled in voids of a capacitor element.

The capacitor element is inserted into an cylindrical outer casing with a bottom. A sealing body is mounted on an opened end of the outer casing, and the capacitor element is sealed by crimping the opened end. For example, the sealing body is formed of rubber or formed of a laminate of rubber and a hard substrate. The rubber may be ethylene propylene rubber or butyl rubber, etc. Anode lead wire and cathode lead wire are connected to the anode body and the cathode body and are drawn out from the sealing body.

Furthermore, the capacitor element may not be inserted into the outer casing with a bottom. For example, the capacitor element may be wrapped by laminate film. Furthermore, the capacitor element may be sealed by molding resin such as heat-resistance resin and insulation resin or by forming thin film of said resin using method such as dip-coating and printing, etc. Furthermore, the capacitor element may be a flat-plate type with an exterior omitted.

### (Anode Body)

The anode body is an elongated foil body formed of valve action metal. The valve action metal is aluminum, tantalum, niobium, niobium oxide, titanium, hafnium, zirconium, zinc, tungsten, bismuth, and antimony, etc. The purity of the anode body is desirably 99.9% or more, and impurities such as silicon, iron, copper, magnesium, and zinc may be included.

An enlarged surface layer is formed on one or both surfaces of the anode body. The enlarged surface layer is a sintered body obtained by sintering powder of valve action metal or etching foil obtained by etching elongated foil, and is formed by voids between dense powder, or tunnel-shaped pits or spongy pits.

The tunnel-shaped etching pits are holes dug in the thickness direction of the foil. Typically, the tunnel-shaped etching pits are formed by applying DC current on the foil body in aqueous acidic solution in which halogen ions are present, such as hydrochloric acid. Furthermore, the tunnel-shaped etching pits are enlarged by applying DC current on the foil body in aqueous acidic solution such as nitric acid. The spongy pits make the enlarged surface layer a spongy layer with a series of fine spatial air gaps. The spongy etching pits are formed by applying AC current on the foil body in aqueous acidic solution in which halogen ions are present, such as hydrochloric acid.

It is particularly preferable to form the enlarged surface layer of the anode body with the spongy etching pits. The enlarged surface layer of the anode body with the spongy etching pits is dense, and in the case with the rated voltage of 100 V or less, can achieve large foil capacity compared to the anode body with tunnel-shaped etching pits when the solid electrolyte layer is sufficiently filled.

The dielectric oxide film is formed on one or both surfaces of the anode body on which the enlarged surface layer is formed. Typically, the dielectric oxide film is oxide film formed on the surface layer of the anode body, and when the anode body is made of aluminum, the dielectric oxide film is an aluminum oxide layer obtained by oxidizing the surface layer of the enlarged surface layer. In the chemical conversion treatment to form the dielectric oxide film, voltage is applied on the anode body in chemical conversion solution to achieve the desired withstand voltage. The chemical conversion solution is solution without halogen ions, and for example is phosphoric acid-based chemical conversion solution such as ammonium dihydrogen phosphate, boric acid-based chemical conversion solution such as ammonium borate, and adipic acid-based chemical conversion solution such as ammonium adipate, etc.

### (Cathode Body)

The cathode body is elongated cathode foil formed of valve action metal. The purity of the cathode foil is preferably 99% or more. The enlarged surface layer is formed on the cathode body, like the anode body. The cathode foil may be plane foil without the enlarged surface layer. The cathode foil may have natural oxide film, or thin oxide film (about 1 to 10 V) formed by chemical conversion treatment. The natural oxide film is formed when oxygen in the air reacts with the cathode foil. In addition, a layer consisting of metal nitrides, metal carbides, or metal carbonitrides may be formed in the cathode body by vapor-deposition, or a layer containing carbon may be formed on the surface of the cathode body.

Alternatively, the cathode body is a laminate body of a metal layer and a carbon layer, and the carbon layer is arranged to face the anode body. The carbon layer is formed by applying carbon paste on the solid electrolyte layer which had been formed on the anode body and curing the carbon paste by heating. The metal layer may be a silver layer, and is formed by applying paste of said metal on the carbon layer and curing the paste by heating.

### (Solid Electrolyte Layer)

The solid electrolyte layer contains two types of conductive polymers. A first conductive polymer is a polymer of 3,4-ethylenedioxythiophene in which a methylene phosphonic acid group is introduced into an ethylenedioxy skeleton. 3,4-Ethylenedioxythiophene is also called as 2,3-dihydrothieno[3,4-b][1,4]dioxin.

For example, the first conductive polymer may be a polymer of 3,4-dioxythiophene in which the methylene phosphonic acid group is introduced at 2-position of the ethylenedioxy skeleton as represented by the following chemical formula (A). Alternatively, the first conductive polymer may be a polymer of 3,4-dioxythiophene in which the methylene phosphonic acid group is introduced at 1-position of the ethylenedioxy skeleton. The methylene phosphonic acid group in a side chain acts as a hydrogen ion-donating dopant.

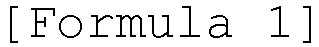

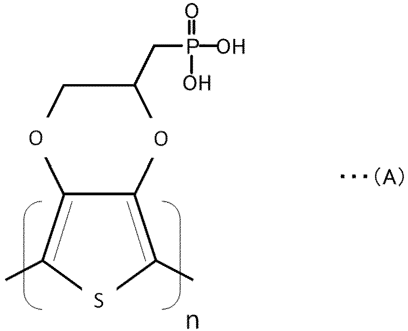

Other than a single polymer in which only monomer units of 3,4-ethylenedioxythiophene in which the methylene phosphonic acid group is introduced into the ethylenedioxy skeleton, the first conductive polymer may be a copolymer of said monomer units and 3,4-ethylenedioxythiophene or derivatives of 3,4-ethylenedioxythiophene. Hereinafter, the first conductive polymer is called phosphonic acid-introducing PEDOT.

A second conductive polymer is a polymer including 3,4-ethylenedioxythiophene or derivatives thereof as monomer units. The derivative be compounds selected from thiophene with substituents at 3-position and 4-position, and the 3-position and 4-position substituents of the thiophene ring may form a ring together with the 3-position and 4-position carbon. Furthermore, the derivative may be a compound in which a side chain with an alkyl group is bonded to an ethylene group of 3,4-ethylenedioxythiophene, and for example, may be 2-methyl-ethylenedioxythiophene, 2-ethyl-3,4-ethylenedioxythiophene, and 2-butyl-3,4-ethylenedioxythiophene.

Hereinafter, the second conductive polymer is simply called PEDOT. PEDOT exhibits conductivity when doped by external dopant molecules. As the dopant, known dopants may be used without limitation. For example, the dopant may be inorganic acid such as boric acid, nitric acid, and phosphoric acid, and organic acid such as acetic acid, oxalic acid, citric acid, aconitic acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid, etc. Furthermore, polyanions may be polyvinyl sulfonic acid, polystyrene sulfonic acid, polyallyl sulfonic acid, polyacrylic sulfonic acid, polymethacrylic sulfonic acid, poly(2-acrylamide-2-methylpropanesulfonic acid), polyisoprene sulfonic acid, polyacrylic acid, polymethacrylic acid, and polymaleic acid, etc.

Accordingly, when the solid electrolyte layer is formed by two types of polymers that are phosphonic acid-introducing PEDOT and PEDOT, the capacity appearance rate of the solid electrolytic capacitor is improved. This is because the solubility of phosphonic acid-introducing PEDOT to a solvent is improved due to dissociation of the phosphonic acid group so that phosphonic acid-introducing PEDOT is soluble, and furthermore, the phosphonic acid group has high absorptivity to the oxide film formed on the surface of the anode body. Therefore, phosphonic acid-introducing PEDOT covering the surface of the anode body improves the adhesion of the anode body and the solid electrolyte layer, reducing the dissociation area between the anode body and the solid electrolyte layer. If the solid electrolyte layer is formed only by phosphonic acid-introducing PEDOT, the density of the conductive polymer in the voids of the etching pits decreases. PEDOT easily fills the voids that could not be filled by the phosphonic acid-introducing PEDOT and enriches the solid electrolyte layer.

Even when the enlarged surface layer of the anode body is formed by the spongy etching pits or pseudo boehmite film is formed before the chemical conversion treatment, phosphonic acid-introducing PEDOT can enter and be fixed in this dense spongy etching pits. When the solid electrolyte layer is formed by two types of polymers that are phosphonic acid-introducing PEDOT and PEDOT, the capacity appearance rate of the solid electrolytic capacitor is improved.

Note that the capacity appearance rate is a ratio of the capacitance of the solid electrolytic capacitor relative to the synthesized capacity of the anode body and the cathode body and is a percentage of a result obtained by dividing the capacitance of the solid electrolytic capacitor by the synthesized capacity of the anode body and the cathode body. The synthesized capacity of the anode foil and the cathode foil is the synthesized capacity of the solid electrolytic capacitor regarded as a capacitor in which the anode-side and the cathode-side are connected in series, and is a calculation value calculated from an actual value or a theoretical value of the capacitance of the anode body and an actual value or a theoretical value of the capacitance of the cathode body as the parameters. When the cathode foil has no dielectric or when it can be said that the capacitance of the cathode body asymptotes to infinity, the synthesized capacitance of the anode foil and the cathode foil is the actual value or the theoretical value of the capacitance of the anode foil. The capacitance of the solid electrolytic capacitor is the actual value.

The capacity of the anode foil and the cathode foil is measured by cutting out test pieces of predefined area from the anode foil and the cathode foil, immersing the test pieces in capacitance measurement solution in a glass measurement tank with a platinum plate as the facing electrode, and using the capacitance meter. For example, the predefined area is 1 cm², the capacitance measurement solution is aqueous solution of ammonium adipate of 30 °C, the capacitance meter is a potentiostat and a frequency response analyzer, an electrochemical impedance analyzer or LCR meter, and the like, and as the measurement condition, DC bias voltage is 0 V to 1.5 V, and AC amplitude is 0.1 V to 1 V.

Preferably, an entire surface of the anode foil including the inner wall of the etching pits are covered by thin layer of phosphonic acid-introducing PEDOT. When the coverage of the surface of the anode body by the phosphonic acid-introducing PEDOT becomes closer to the entire surface, PEDOT fully draws the capacity and the capacity appearance rate becomes extremely excellent. Here, it can be assumed that, the absorptivity of the phosphonic acid group to the dielectric oxide film which is an anodized aluminum substrate is excellent, and the entire surface of the anode body can be covered by the thin film of phosphonic acid-introducing PEDOT by forming the solid electrolyte layer from two types of the polymers including PEDOT.

The manufacturing method of the phosphonic acid-introducing PEDOT is not particularly limited, and for example, can be obtained by the following method.

Firstly, 3,4-ethylenedioxythiophene in which a methylene group with halogen substitients is introduced into the ethylenedioxy skeleton is heated under the presence of acidic catalyst such as sulfuric acid, para-toluene sulfonic acid, or methane sulfonic acid, etc. Michaelis-arbuzov reaction is conducted between 3,4-ethylenedioxythiophene introduced with halogen substituents and tris(trialkylsilyl)phosphite to substitute the halogen is substituted with a bis (trialkylsilyl) phosphonic acid group or a phosphonic acid diester group. Then, basic aqueous solution such as sodium carbonate, potassium carbonate, or aqueous solution of ammonium is applied to the compound after the reaction to cause deprotection.

Next, phosphonic acid-introducing PEDOT is produced by electrolytic polymerization or chemical polymerization. Residual monomers and impurities may be removed from phosphonic acid-introducing PEDOT by purification such as ultrafiltration, cation exchange, and anion exchange, and phosphonic acid-introducing PEDOT may be dissolved in solution. The pH of the phosphonic acid-introducing PEDOT solution is adjusted, and various additives may be added as necessary.

The solvent of the phosphonic acid-introducing PEDOT solution be any solvent if phosphonic acid-introducing PEDOT dissolves thereto, and water, or the mixture of water and organic solvents is preferable. The organic solvent of the conductive polymer dispersion may be polar solvents, alcohol, esters, hydrocarbon, carbonate compounds, ether compounds, chain ether, heterocyclic compounds, and nitrile compounds, etc. Furthermore, for example, common additives such as organic binders, surfactants, dispersants, defoamers, coupling agents, antioxidants, and UV absorbers may be added to the conductive polymer solution.

phosphonic acid-introducing PEDOT is attached to various attachment targets by immersing the attachment target in the phosphonic acid-introducing PEDOT solution, and drying the attachment target. The attachment target is the anode body. Alternatively, the attachment target is each of the anode body, the cathode body, and the separator. Alternatively, the capacitor element which is an assembly incorporating the anode body, the cathode body, and the separator.

After the immersion, the solvent of the conductive polymer solution is removed by drying process. For example, the temperature environment in the drying process is 40 to 200 °C, and the drying time is 3 to 180 minutes. The drying process may be repeated multiple times. The drying process may be performed under the depressurized environment, for example, under the pressure of 5 to 100 kPa. The phosphonic acid-introducing PEDOT solution may be applied by droplet or by spraying other than the immersion.

PEDOT is further attached on the attachment target on which phosphonic acid-introducing PEDOT had been attached. The attachment method of PEDOT may be any known method, and for example, electrolytic polymerization or chemical polymerization, or impregnation of impregnating the attachment target with PEDOT dispersion in which PEDOT is disperse in particles or powder may be used.

In the chemical polymerization, the attachment target is immersed in each of solution containing monomers that are monomer units of PEDOT and solution containing an oxidizing agent, or the attachment target is immersed in mixture solution in which said monomers and oxidizing agent are stirred and mixed to perform polymerization reaction. The oxidizing agent may be any known compounds that release dopants, may be trivalent iron salt such as iron (III) p-toluene sulfonate, iron (III) naphthalene sulfonate, and iron (III) anthraquinone sulfonate, or peroxodisulfate salt such as peroxiodisulfuric acid, ammonium peroxodisulfate, and sodium peroxodisulfate, and may be used in single or in combination of two or more. Although there is no strict limitation for the polymerization temperature, the temperature is generally in the range of 10 to 200 °C. The polymerization time is generally in the range of 10 minutes to 30 hours.

In the electrolytic polymerization, the attachment target is immersed in the polymer solution to perform polymerization reaction. The monomers that are the monomer units of PEDOT and the support electrolyte is added to the polymer solution. The support electrolyte contains at least one type of compounds selected from a group consisting of borodisalicylic acid and borodisalicylic acid salt. The salt may be alkali metal salt such as lithium salt, sodium salt, and potassium salt, ammonium salt, alkyl ammonium salt such as ethyl ammonium salt and butyl ammonium salt, dialkyl ammonium salt such as diethyl ammonium salt and dibutyl ammonium salt, trialkyl ammonium salt such as triethyl ammonium salt and tributyl ammonium salt, and tetraalkyl ammonium salt such as tetraethyl ammonium salt and tetrabutyl ammonium salt. It is preferable to use the quaternary ammonium salt as the support electrolyte. Since the conductivity is high and the current distribution with respect to the electrode foil during the electrolytic polymerization is uniform for the quaternary ammonium salt, the quaternary ammonium ions of the quaternary ammonium salt may be tetramethylammonium, triethylmethylammonium, and tetraethylammonium, etc. For example, tetraethylammonium borodisalicylate (TeEA-BS), tetramethylammonium borodisalicylate (TeMA-BS), and the like may be used for the support electrolyte.

The electrolytic polymerization is performed by either of the constant potential method, the constant current method, or the potential sweep method. In the constant potential method, potential of 1.0 to 1.5 V is suitable for a reference electrode, in the constant current method, current of 1 to 10000 µA/cm² is suitable, and in the potential sweep method, it is suitable to sweep the range of 0 to 1.5 V for a reference electrode at a rate of 5 to 200 mV/second. Although there is no strict limitation for the polymerization temperature, the temperature is generally in the range of 10 to 60 °C. The polymerization time is generally in the range of 10 minutes to 30 hours.

In the electrolytic polymerization and chemical polymerization, the solvent is not particularly limited if the solvent can dissolve the desired amount of the monomers and the support electrolyte and does not affect the electrolytic polymerization. For example, the solvent may be water, methanol, ethanol, isopropanol, butanol, ethylene glycol, acetonitrile, butyronitorile, acetone, methylethylketone, tetrahydrofuran, 1,4-dioxan, γ-butyrolactone, methyl acetate, ethyl acetate, methyl benzoate, ethyl benzoate, ethylene carbonate, propylene carbonate, nitromethane, nitrobenzene, sulfolane, and dimethyl sulfolane. These solvents may be used in single or in combination of two or more.

In the impregnation method, the attachment target is immersed in the PEDOT dispersion. The attachment target is impregnated with the PEDOT dispersion by the immersion, and is dried to volatilize the solvent so that PEDOT remains on the attachment target. The PEDOT dispersion may be applied by droplet or by spraying other than the immersion.

The PEDOT dispersion is solution in which PEDOT is dispersed. PEDOT is produced by chemical polymerization or electrolytic polymerization, and the PEDOT dispersion is purified by purification means such as ultrafiltration of the polymer solution, cation exchange, and anion exchange. PEDOT should be dispersed in the conductive polymer dispersion. Therefore, for example, the solvent of the PEDOT dispersion may be water, organic solvents, or water and organic solvents. The pH of the PEDOT dispersion may be adjusted. Ultrasonic homogenizer and the like may be used to disperse PEDOT in the PEDOT dispersion.

The drying process of the PEDOT dispersion may be repeated multiple times and may be performed under depressurized environment. For example, the temperature environment in the drying process is 40 to 200 °C, and the drying time is 3 to 180 minutes. The drying process may be repeated multiple times. The drying process may be performed under the depressurized environment, for example, under the pressure of 5 to 100 kPa.

Here, in the manufacturing process, phosphonic acid-introducing PEDOT and PEDOT must be attached to the attachment target by separate processes, and phosphonic acid-introducing PEDOT is attached to the attachment target before PEDOT. That is, the solid electrolyte layer is formed by two separate processes of a primary solid electrolyte layer formation process to attach phosphonic acid-introducing PEDOT and a secondary solid electrolyte layer formation process to attach PEDOT. The secondary solid electrolyte layer formation process is performed after phosphonic acid-introducing PEDOT is attached and the drying process. The primary solid electrolyte layer formation process and the secondary solid electrolyte layer formation process are separated processes separated by the drying process.

If the PEDOT is attached to the attachment target before phosphonic acid-introducing PEDOT, or if phosphonic acid-introducing PEDOT and PEDOT are attached to the attachment target together, at least a part of phosphonic acid-introducing PEDOT is physically prevented from adhering to the anode body. Therefore, phosphonic acid-introducing PEDOT cannot adhere to the anode body more than PEDOT, and the adhesion of the solid electrolyte layer and the anode body does not increase. In particular, when the enlarged surface layer of the anode body is formed by the spongy etching pits or pseudo boehmite film is formed before the chemical conversion treatment, many phosphonic acid-introducing PEDOT cannot enter in the dense spongy etching pits.

Therefore, in the manufacturing process, the solid electrolyte layer is formed by two separate processes of the primary solid electrolyte layer formation process to attach phosphonic acid-introducing PEDOT and the secondary solid electrolyte layer formation process to attach PEDOT, and the secondary solid electrolyte layer formation process is performed after the drying process. Furthermore, when forming the solid electrolyte layer according to such a manufacturing method, the solid electrolyte layer may have two-layer structure in which a first solid electrolyte layer that is phosphonic acid-introducing PEDOT layer and a second solid electrolyte layer that is PEDOT layer are laminated.

### (Separator)

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in combination.

Note that the separator separates the anode body and the cathode body and holds the solid electrolyte between the anode body and the cathode body to prevent short-circuit between the anode body and the cathode body. If the solid electrolyte can keep its shape on its own and can hold the anode body and the cathode body apart from each other, the separator can be omitted from the solid electrolytic capacitor.

### (Electrolytic Solution)

The solid electrolytic capacitor may only include the solid electrolyte, or the electrolytic solution may be used together. The electrolytic solution is impregnated in the capacitor element after the attachment process of the conductive polymer and the drying process. The electrolytic solution bears the repairing of at least the dielectric oxide film.

A solvent of the electrolytic solution is not particularly limited, and a protic organic polar solvent or an aprotic organic polar solvent may be used. The protic polar solvent may be monohydric alcohol, polyhydric alcohol, oxyalcohol compounds, and water, and for example, is ethylene glycol or propylene glycol. The aprotic polar solvent may be sulfones, amides, lactones, cyclic amides, nitriles, sulfoxides, and the like, and for example, is sulfolane, γ-butyrolactone, ethylene carbonate, or propylene carbonate.

A solute included in the electrolytic solution includes anion and cation components, and is typically organic acid such as adipic acid and benzoic acid or salt thereof, inorganic acid such as boric acid and phosphoric acid or a salt thereof, or a composite compound of organic acid and inorganic acid such as borodisalicylic acid or ion-dissociative salt thereof, and is used single or in combination of two or more. At least one salt of the organic acid, the inorganic acid, and the composite compound of organic acid and inorganic acid may be ammonium salt, quaternary ammonium salt, quaternary amidinium salt, amine salt, sodium salt, and potassium salt, etc. Acid that is the anion and base that is the cation may be separately added to the electrolytic solution as the solute components.

Furthermore, other additives may be added to the electrolytic solution. The additive may be polyethylene glycol, complex compounds of boric acid and polysaccharides (mannit, sorbit, etc.), complex compounds of boric acid and polyhydric alcohol, borate esters, nitro compounds, phosphate esters, and colloidal silica, etc. These may be used in single or in combination of two or more. The nitro compound suppresses an amount of hydrogen gas produced in the electrolytic capacitor. The nitro compound may be o-nitrobenzoic acid, m-nitrobenzoic acid, p-nitrobenzoic acid, o-nitrophenol, m-nitrophenol, and **p-**nitrophenol, etc.

Hereinafter, the manufacturing method of the solid electrolytic capacitor will be described in more detail based on the examples. Note that the present disclosure is not limited to the below examples.

### (Example 1)

A solid electrolytic capacitor of the example 1 was produced as follows. The solid electrolytic capacitor of the example 1 had a flat-plate structure. Firstly, aluminum foil was used as the anode body. An enlarged surface layer is formed on a surface of the aluminum foil. In the formation of the enlarged surface layer, AC current was applied on the aluminum foil in aqueous solution containing hydrochloric acid to form spongy etching pits.

Next, the chemical conversion treatment was performed on the aluminum foil on which the enlarged surface layer was formed in aqueous solution of ammonium adipate to form dielectric oxide film with chemical conversion voltage of 8 V on the surface of the aluminum foil.

The aluminum foil with the dielectric oxide film was machined by laser into a predetermined shape, so that a plurality of the solid electrolytic capacitors can be diced and separated from single foil surface. After the machining, the chemical conversion treatment was performed on the aluminum foil in aqueous solution of ammonium dihydrogen phosphate to form the dielectric oxide film on the machined surface.

An insulation resist layer was printed on the aluminum foil including a region that would be a terminal at the anode side except for a region that would be the anode, and was dried for 20 minutes at 150 °C. That is, the insulation resist layer was printed so that the solid electrolyte layer did not form on the region that would be the terminal at the anode side.

After printing the insulation resist layer, the aluminum foil was immersed in conductive polymer solution containing phosphonic acid-introducing PEDOT. A solvent of the conductive polymer solution was water, and phosphonic acid-introducing PEDOT was 2 wt% of the conductive polymer solution. After immersing the aluminum foil in the conductive polymer solution for 2 minutes, the drying process was performed to place the aluminum foil still at room temperature for 10 minutes and then under the temperature environment of 100 °C for 30 minutes. By this, a region of the first conductive polymer of the solid electrolyte layer, containing phosphonic acid-introducing PEDOT, was formed on the surface of the anode of the aluminum foil.

A region of the second conductive polymer of the solid electrolyte layer, containing PEDOT by electrolytic polymerization, was formed on the aluminum foil on which phosphonic acid-introducing PEDOT was attached. Polymer solution for the electrolytic polymerization contained acetonitrile as the solvent, **2-**ethyl-3,4-ethylenedioxythiophene (Et-EDOT) as the monomers, and tetraethylammonium borodisalicylate (TeEA-BS) as the support electrolyte. The aluminum foil was immersed in this polymer solution, and current was applied in the solution to perform the electrolytic polymerization.

The chemical conversion treatment was performed on the aluminum foil on which PEDOT was formed by the electrolytic polymerization. In the chemical conversion treatment, voltage of 8V was applied on the aluminum foil in aqueous solution of ammonium adipate for 10 minutes at 30 °C.

Next, carbon paste was printed on the solid electrolyte layer by a screen printer and was dried for 10 minutes at 120 °C. After this drying process, the carbon layer was formed on the solid electrolyte layer. Furthermore, silver paste was printed on the carbon layer and was dried for 30 minutes at 150 °C. By this drying process, a silver layer is formed on the carbon layer. These carbon layer and silver layer corresponded to the cathode body of the solid electrolytic capacitor.

After the cathode body was formed, the insulation resist layer and the dielectric oxide film covering the region to form the anode terminal is peeled off by laser. Note that the insulation resist layer and the dielectric oxide film may be peeled off by using mechanical peeling by pressing a jig, other than laser irradiation. Then, the anode terminal was formed in a portion exposed by the peeling. In the formation of the anode terminal, a plating pre-process and a plating process were performed.

In the plating pre-process, the following processes were sequentially performed.
- Alkali etching as smutting (processing temperature: 55 °C, processing time: 60 seconds)
- desmutting (processing liquid: 30% nitric acid aqueous solution, processing temperature: room temperature, processing time: 60 seconds)
- First Zn substitution (processing temperature: room temperature, processing time: 20 seconds)
- Zn peeling (processing liquid: 30% nitric acid aqueous solution, processing temperature: room temperature, processing time: 30 seconds)
- Second Zn substitution (processing temperature: room temperature, processing time: 30 seconds)

In the plating process, the following processes were sequentially performed.
- Electrolytic Ni plating (processing liquid: Watts Baths, processing temperature: 50 °C, current density: -100 mAcm⁻², processing time: 10 minutes)
- Electrolytic Sn/Ag plating (processing liquid: neutral Sn plating bath, processing temperature: 50 °C, current density: -10 mAcm⁻², processing time: 10 minutes)

Note that the Watts Baths contained nickel sulfate hexahydrate of 300 g/L, nickel chloride hexahydrate of 50g/L, and boric acid of 40g/L. Furthermore, the neutral Sn plating bath contained 0.1 M of tin sulfate, 0.01M of silver nitrate, and 0.2M of sodium pyrophosphate.

A region including the anode foil formed of aluminum foil, the solid electrolyte layer, the cathode body, and the anode terminal was diced and separated by laser to produce the solid electrolytic capacitor of the example 1. Aging was performed to the produced solid electrolytic capacitor by applying current with current density of 1 mA and voltage of 4.6 V for 60 minutes at 125 °C. The solid electrolytic capacitor had the rated voltage of 4 V.

A solid electrolytic capacitor of the comparative example 1 was produced for the comparison with the solid electrolytic capacitor of the example 1. The solid electrolytic capacitor of the comparative example 1 was different from the example 1 in that the primary solid electrolytic capacitor formation process was omitted. That is, the solid electrolytic capacitor of the comparative example 1 did not containing phosphonic acid-introducing PEDOT in the solid electrolyte layer. For the other points, the comparative example 1 was produced with the same configuration, same composition, and the same manufacturing method and condition as the example 1.

The foil capacity of the anode foil included in the solid electrolytic capacitor of the example 1 and the comparative example 1, and the capacitance (Cap), the dissipation factor (tanδ), the equivalent series resistance (ESR) of the solid electrolytic capacitors of the example 1 and the comparative examples 1 were measured. Furthermore, the capacity appearance rate was calculated from the capacity of the anode foil and the capacitance.

The capacity of the anode foil was measured using the aluminum foil to which the surface enlargement and the chemical conversion treatment were performed. The aluminum foil with the defined sample area of 1 cm2 was immersed in aqueous solution of ammonium adipate at 30 °C, and was measured using a potentiostat SI1287 and a frequency response analyzer 1252A from Solartron analytical, with DC bias voltage of 1.5 V, AC amplitude of 1 V, and measurement frequency of 120 Hz. As a result, the foil capacity of the anode foil of the example 1 and the comparative example 1 was 55.0 µF.

The Cap, tanδ, and ESR were measured using a LCR meter (ZM2376 from NF Corporation) at the temperature of 20 °C. The measurement frequency of the Cap and tanδ was 120 Hz, and the measurement frequency of the ESR was 100 kHz. The capacity appearance rate was calculated by dividing the measurement result of the capacitance by the foil capacity of the anode foil and multiplying 100 to convert the value into percentage.

The measurement result and the calculation result of the example 1 and the comparative example 1 are shown in the below table 1. As shown in the below table 1, it was observed that the capacity appearance rate of the example 1 was improved by 16.6 % compared to the comparative example 1.

**[Table 1]**

| | | | **Example 1** | **Comparative Example 1** |
|---|---|---|---|---|
| **Solid Electrolyte Layer** | **Primary Solid Electrolyte Layer Formation Process** | | **Phosphonic Acid Group Introducing PEDOT** | **None** |
| | **Secondary Solid Electrolyte Layer Formation Process** | **Monomer** | **Et-EDOT** | |
| | | **Formation Method** | **Electrolytic Polymerization** | |
| **Type of Capacitor** | | | **Flat-Plate Type** | |
| **Rated Voltage** | | | **4 V** | |
| **Capacitance (120Hz) [µF]** | | | **50.1** | **43.0** |
| **Capacity Appearance Rate (120Hz)[%]** | | | **91.1** | **78.1** |
| **tanδ (120Hz)** | | | **0.015** | **0.015** |
| **ESR (100kHz) [mΩ]** | | | **9.5** | **9.7** |

### (Example 2)

Next, the solid electrolytic capacitor of the example 2 was produced. The solid electrolytic capacitor of the example 2 was a wound-type. Firstly, the enlarged surface layer was formed on the surface of each aluminum foil that was the anode body and the cathode body. In the formation of the enlarged surface layer, AC current was applied on the aluminum foil in aqueous solution containing hydrochloric acid to form the spongy etching pits. Next, the chemical conversion treatment was performed on the aluminum foil on which the enlarged surface layer was formed in aqueous solution of ammonium adipate to form the aluminum foil, in which the dielectric oxide film with chemical conversion voltage of 55 V was formed on the surface, as the anode foil. Furthermore, the aluminum foil, in which titanium carbide layer was formed on the aluminum foil with the enlarged surface layer by arc ion plating, was the cathode foil.

These anode foil and cathode foil were each connected to lead wire and were wound to face each other via a separator formed of acrylic fiber, so that the capacitor element with diameter of 10 mm and height of 11.5 mm was formed. Current with current density of 10 mA was applied on the capacitor element in aqueous solution of ammonium dihydrogen phosphate, and after voltage reached 58 V, said voltage was maintained for 24 minutes to perform restorative chemical conversion. Then, the capacitor element was washed in pure water and was dried at 105 °C.

The capacitor element was immersed in the conductive polymer solution containing phosphonic acid-introducing PEDOT. The solvent of the conductive polymer solution was water, and phosphonic acid-introducing PEDOT was 2 wt% of the conductive polymer solution. After immersing the capacitor in the conductive polymer solution, the drying process was performed to expose the capacitor element under the temperature environment of 100 °C for 15 minutes. By this, a region of the first conductive polymer of the solid electrolyte layer, containing phosphonic acid-introducing PEDOT, was formed in the capacitor element including the surface of the anode foil. Then, the capacitor element with phosphonic acid-introducing PEDOT formed was exposed under the temperature environment of 170 °C for 60 minutes for heat processing.

Next, the region of the second conductive polymer of the solid electrolyte layer, containing PEDOT by chemical polymerization, was formed on the capacitor element after the heat processing. The polymer solution was prepared by mixing ethanol solution containing 60 wt% of iron (III) para-toluene sulfonate as the oxidizing agent and 3,4-ethylenedioxythiophene as the monomers. The capacitor element was immersed in the polymer solution.

After the capacitor element was impregnated with the polymer solution, the capacitor element was exposed under the temperature environment of 40 °C for 30 minutes, then under the temperature environment of 60 °C for 60 minutes, and further under the temperature environment of 150 °C for 60 minutes to perform polymerization. After the solid electrolyte layer was formed, the capacitor element was mounted with a sealing body, was inserted in an outer casing with bottom, and an opened end of the outer casing was sealed by the sealing body. Aging was performed to the produced solid electrolytic capacitor by applying current with current density of 1 mA and voltage of 32.5 V for 60 minutes at 125 °C. The rated voltage of the solid electrolytic capacitor of the example 2 was 25 V.

A solid electrolytic capacitor of the comparative example 2 was produced for the comparison with the solid electrolytic capacitor of the example 2. The solid electrolytic capacitor of the comparative example 2 was different from the example 2 in that the primary solid electrolytic capacitor formation process was omitted. That is, the solid electrolytic capacitor of the comparative example 2 did not containing phosphonic acid-introducing PEDOT in the solid electrolyte layer. For the other points, the comparative example 2 was produced with the same configuration, same composition, and the same manufacturing method and condition as the example 2.

The foil capacity of the anode foil included in the solid electrolytic capacitor of the example 2 and the comparative example 2, and the capacitance (Cap), the dissipation factor (tanδ), the equivalent series resistance (ESR) of the solid electrolytic capacitors of the example 2 and the comparative examples 2 were measured. Furthermore, the capacity appearance rate was calculated from the foil capacity and the capacitance. The measurement method and the calculation method were the same as those of the example 1 and comparative example 1.

The measurement result and the calculation result of the example 2 and the comparative example 2 are shown in the below table 2. Note that the foil capacity of the anode foil of the example 2 and the comparative example 2 was 517.5 µF.

**[Table 2]**

| | | | **Example 2** | **Comparative Example 2** |
|---|---|---|---|---|
| **Solid Electrolyte Layer** | **Primary Solid Electrolyte Layer Formation Process** | | **Phosphonic Acid Group Introducing PEDOT** | **None** |
| | **Secondary Solid Electrolyte Layer Formation Process** | **Monomer** | **EDOT** | |
| | | **Formation Method** | **Chemical Polymerization** | |
| **Type of Capacitor** | | | **Wound Type** | |
| **Rated Voltage** | | | **25 V** | |
| **Capacitance (120Hz) [µF]** | | | **411.0** | **378.2** |
| **Capacity Appearance Rate (120Hz)[%]** | | | **79.4** | **73.1** |
| **tanδ (120Hz)** | | | **0.026** | **0.037** |
| **ESR (100kHz) [mΩ]** | | | **9.2** | **10.0** |

As shown in the shown table 2, it was observed that the capacity appearance rate of the example 2 was improved by 8.6 % compared to the comparative example 2. Furthermore, as shown in the table 2, it was observed that, when phosphonic acid-introducing PEDOT was formed in the solid electrolyte layer and the region of PEDOT was further formed in the solid electrolyte layer, the tanδ at 120 kHz and the ESR at 100 kHz were improved.

### (Example 3)

A solid electrolytic capacitor of the example 3 was produced. The solid electrolytic capacitor of the example 3 was a the wound-type. The example 3 was different from the example 2 in the configuration of the capacitor element and the secondary solid electrolyte layer formation process of forming the region of the second conductive polymer containing PEDOT. In the solid electrolytic capacitor of the example 3, the capacitor element, in which the anode foil with the dielectric oxide film with chemical conversion voltage of 63.6 V and the cathode foil with the dielectric oxide film with chemical conversion voltage of 3 V were wound via the manila-paper separator, was used. The example 3 was produced with the same configuration, same composition, and the same manufacturing method and condition as the example 2, except for the configuration of the capacitor element and the secondary solid electrolyte layer formation process.

In the secondary solid electrolyte layer formation process of the example 3, the capacitor element was impregnated with the conductive polymer dispersion in which PEDOT was dispersed. The capacitor element was immersed in the conductive polymer dispersion, and was impregnated with the conductive polymer solution under the pressurized environment of 20 kPa for 2 minutes. Next, the drying process was performed to place the aluminum foil still at room temperature for 10 minutes and then under the temperature environment of 150 °C for 30 minutes. By this, the region of the second conductive polymer containing PEDOT was formed in the solid electrolyte layer of the capacitor element. Note that the impregnation of the conductive polymer dispersion was performed only once.

After the solid electrolyte layer was formed, the capacitor element was mounted with a sealing body, was inserted in an outer casing with bottom, and the outer casing was sealed by the sealing body. Aging was performed to the produced solid electrolytic capacitor by applying current with current density of 1 mA and voltage of 40.3 V for 60 minutes at 125 °C. The rated voltage of the solid electrolytic capacitor of the example 3 and the comparative example 3 was 35 v.

A solid electrolytic capacitor of the comparative example 3 was produced for the comparison with the solid electrolytic capacitor of the example 3. The solid electrolytic capacitor of the comparative example 3 was different from the example 3 in that the primary solid electrolytic capacitor formation process was omitted. That is, the solid electrolytic capacitor of the comparative example 3 did not containing phosphonic acid-introducing PEDOT in the solid electrolyte layer. For the other points, the comparative example 3 was produced with the same configuration, same composition, and the same manufacturing method and condition as the example 3.

The foil capacity of the anode foil included in the solid electrolytic capacitor of the example 3 and the comparative example 3, and the capacitance (Cap), the dissipation factor (tanδ), the equivalent series resistance (ESR) of the solid electrolytic capacitors of the example 3 and the comparative examples 3 were measured. Furthermore, the capacity appearance rate was calculated from the foil capacity and the capacitance. The measurement method was the same as those of the example 1 and comparative example 1. Furthermore, The capacity appearance rate was calculated by dividing the measurement result of the capacitance by the synthesized capacity of the anode foil and the cathode foil, and multiplying 100 to convert the value into percentage.

The measurement result and the calculation result of the example 3 and the comparative example 3 are shown in the below table 3. Note that the synthesized capacity of the anode foil and the cathode foil of the example 3 and the comparative example 3 was 270.0 µF.

**[Table 3]**

| | | | **Example 3** | **Comparative Example 3** |
|---|---|---|---|---|
| **Solid Electrolyte Layer** | **Primary Solid Electrolyte Layer Formation Process** | | **Phosphonic Acid Group Introducing PEDOT** | **None** |
| | **Secondary Solid Electrolyte Layer Formation Process** | **Monomer** | **EDOT** | |
| | | **Formation Method** | **PD Impregnation** | |
| **Type of Capacitor** | | | **Wound Type** | |
| **Rated Voltage** | | | **35 V** | |
| **Capacitance (120Hz) [µF]** | | | **249.9** | **218.9** |
| **Capacity Appearance Rate (120Hz)[%]** | | | **92.5** | **81.1** |
| **tanδ (120Hz)** | | | **0.058** | **0.115** |
| **ESR (100kHz) [mΩ]** | | | **20.3** | **25.2** |

As shown in the shown table 3, it was observed that the capacity appearance rate of the example 3was improved by 14.1 % compared to the comparative example 3. Furthermore, as shown in the table 3, it was observed that, when the region of phosphonic acid-introducing PEDOT was formed in the solid electrolyte layer, the tanδ at 120 kHz and the ESR at 100 kHz were improved.

## Claims

1. A solid electrolytic capacitor comprising a solid electrolytic layer;
Wherein:
the solid electrolyte layer contains a first conductive polymer and a second conductive polymer,
the first conductive polymer is a polymer of 3,4-ethylenedioxythiophene in which a methylene phosphonic acid group is introduced into an ethylenedioxy skeleton, and
the second conductive polymer is a polymer of 3,4-ethylenedioxythiophene or derivatives thereof.

2. The solid electrolyte capacitor according to claim 1, further comprising an anode body on which dielectric oxide film is formed,
wherein the first conductive polymer adheres more to the anode body than the second conductive polymer.

3. The solid electrolyte capacitor according to claim 2, wherein:
the anode body has an enlarged surface layer having spongy etching pits, and
in the enlarged surface layer, the first conductive polymer adheres to the anode body in a larger amount than the second conductive polymer.

4. A manufacturing method of a solid electrolytic capacitor including an anode body, a cathode body, and a solid electrolyte layer, comprising:
a primary solid electrolyte layer formation process of attaching a first polymer of 3,4-ethylenedioxythiophene in which a methylene phosphonic acid group is introduced into an ethylenedioxy skeleton to the anode body, and
a secondary solid electrolyte layer formation process, that is different from and is after the first solid electrolyte layer formation process, of attaching a second polymer of 3,4-ethylenedioxythiophene or derivatives thereof to a region of the first polymer, or the anode foil.

5. The manufacturing method of a solid electrolytic capacitor according to claim 4, comprising a drying process between the primary solid electrolyte layer formation process and the secondary solid electrolyte layer formation process.

6. The manufacturing method of a solid electrolytic capacitor according to claim 4 or 5, wherein the secondary solid electrolyte layer formation process includes a chemical polymerization or an electrolytic polymerization to polymerize monomers of 3,4-ethylenedioxythiophene or derivatives thereof, or a process to impregnate at least the anode body with dispersion in which a polymer of 3,4-ethylenedioxythiophene or derivatives thereof is dispersed.
